# EUROPÄISCHE PATENTSCHRIFT

(11) **EP 1 490 655 B1**
(45) Veröffentlichungstag und Bekanntmachung des Hinweises auf die Patenterteilung: **01.06.2011**
(21) Anmeldenummer: 03727137.6
(22) Anmeldetag: 08.03.2003
(51) Int. Cl.: G01D 5/20, G01D 5/24

(54) **SCHALTUNGSANORDNUNG ZUR GLEICHRICHTUNG DER AUSGANGSSPANNUNG EINES VON EINEM OSZILLATOR GESPEISTEN SENSORS**
CIRCUIT ARRANGEMENT FOR RECTIFYING THE OUTPUT VOLTAGE OF A SENSOR THAT IS FED BY AN OSCILLATOR
CIRCUIT SERVANT A REDRESSER LA TENSION DE SORTIE D'UN CAPTEUR ALIMENTE PAR UN OSCILLATEUR

(30) Priorität: 22.03.2002 DE 10212813
(43) Veröffentlichungstag der Anmeldung: 29.12.2004
(73) Patentinhaber: Bosch Rexroth AG, 70184 Stuttgart (DE)
(72) Erfinder: PANZER, Karlheinz, 97525 Schwebheim (DE)
(86) Internationale Anmeldenummer: PCT/DE2003/000749
(87) Internationale Veröffentlichungsnummer: WO 2003/081181

(56) Entgegenhaltungen:
- WO-A-02/10674
- DE-C- 4 231 989

## Beschreibung

Die Erfindung betrifft eine Schaltungsanordnung zur Gleichrichtung der Ausgangsspannung eines von einem Oszillator gespeisten Sensors für eine nichtelektrische Größe, deren Amplitude und Phasenlage ein Maß für die nichtelektrische Größe ist.

Derartige Schaltungsanordnungen bilden zusammen mit einem Sensor und einem Oszillator, der den Sensor speist, eine Meßeinrichtung, die eine nichtelektrische Größe, z. B. einen Weg oder einen Druck in eine elektrische Größe, insbesondere in eine elektrische Spannung, umformt, die ein Maß für die nichtelektrische Größe ist. Der Oszillator speist den Sensor mit einer Wechselspannung, deren Frequenz und Amplitude konstant sind. Die nichtelektrische Größe beeinflußt das Übertragungsverhalten des Sensors. Die Amplitude und die Phasenlage der Ausgangsspannung sind daher ein Maß für die zu messende nichtelektrische Größe. Bei dem Sensor kann es sich z. B. um einen induktiv oder kapazitiv arbeitenden Wegaufnehmer handeln, dessen Übertragungsverhalten durch die Auslenkung eines Koppelglieds änderbar ist. Die in Form einer modulierten Wechselspannung vorliegende Ausgangsspannung des Sensors wird zur weiteren Verarbeitung in eine Gleichspannung umgeformt. Die entsprechend der Auslenkung des Koppelglieds modulierte Wechselspannung wird dabei so umgeformt, daß das Vorzeichen und die Höhe der Gleichspannung ein Maß für die Position des Koppelglieds sind. Die Ausgangsspannung des Sensors setzt sich aus dem im Folgenden als Nutzsignal bezeichneten, entsprechend der Auslenkung des Koppelglieds modulierten Trägersignal und aus diesem überlagerten Störsignalen zusammen. Die Störsignale werden insbesondere über die ausgangsseitigen Leitungen des Sensors oder über andere, mit diesen in Verbindung stehende Leitungen aufgenommen. Die Frequenz der Störsignale ist in der Regel deutlich höher als die Frequenz des Nutzsignals. Dem Nutzsignal überlagerte Störimpulse werden zusammen mit dem Nutzsignal der Schaltungsanordnung zur Umformung der Ausgangsspannung des Sensors in eine Gleichspannung zugeführt. Die Störsignale werden zusammen mit Nutzsignal gleichgerichtet und verfälschen daher das Meßergebnis. Dies gilt in besonderem Maße für nadelförmige Störimpulse mit großer Amplitude.

Der Erfindung liegt die Aufgabe zugrunde, eine Schaltungsanordnung der eingangs genannten Art zu schaffen, die eine Verfälschung des Meßergebnisses durch dem Nutzsignal überlagerte Störsignalanteile der der Schaltungsanordnung zugeführten Spannung verringert.

Diese Aufgabe wird durch die im Anspruch 1 gekennzeichneten Merkmale gelöst. Der in Verbindung mit der Gleichrichtung der Ausgangsspannung des Sensors eingesetzte Rampenbildner wirkt als nichtlineares Filter, das insbesondere Störimpulse mit steilem Anstieg und großer Amplitude begrenzt, die im Kleinsignalbereich liegenden Nutzsignale dagegen ungehindert weiterleitet. Diese Maßnahmen verbessern die Signalgüte der gleichgerichteten Spannung und verbessern damit auch die EMV-Eigenschaften einer aus dem Sensor und der Schaltungsanordnung zur Gleichrichtung der Ausgangsspannung des Sensors gebildeten Meßeinrichtung. Die Buchstaben EMV sind in diesem Zusammenhang eine übliche Abkürzung für "elektromagnetische Verträglichkeit".

Vorteilhafte Weiterbildungen der Erfindung sind in den Unteransprüchen gekennzeichnet. In den Ansprüchen 2 und 3 sind Maßnahmen zur Erzeugung des das Vorzeichen des Übertragungsverhaltens steuernden Schaltsignals aus der Ausgangsspannung des Oszillators angegeben. In den Ansprüchen 4 bis 18 sind verschiedene Möglichkeiten für die Realisierung von rampenbildenden Schaltungsanordnungen angegeben, bei denen das Vorzeichen des Übertragungsverhaltens steuerbar ist. In den Ansprüchen 4 bis 13 sind Einzelheiten von derartigen Schaltungsanordnungen angegeben, die aus einer Verstärkerschaltung mit steuerbarem Vorzeichen des Verstärkungsfaktors und einem nachgeschalteten Rampenbildner ohne Vorzeichenumschaltung bestehen. Die Ansprüche 5 und 6 betreffen Ausgestaltungen einer Verstärkerstufe mit steuerbarem Vorzeichen des Verstärkungfaktors. Die Ansprüche 7 bis 9 betreffen Ausgestaltungen von Rampenbildnern mit invertierendem Übertragungsverhalten. Die Ansprüche 10 bis 13 betreffen Ausgestaltungen von Rampenbildnern mit nicht in vertierendem Übertragungsverhalten. In den Ansprüchen 14 bis 18 sind Einzelheiten von Rampenbildnern angegeben, bei denen die Steuerung des Vorzeichens des Übertragungsverhaltens in den Rampenbildner integriert ist. Ein vorgeschalteter gesonderter Verstärker mit umschaltbaren Vorzeichen des Verstärkungsfaktors wird bei dieser Ausgestaltung nicht benötigt. Die Maßnahmen des Anspruchs 17 ermöglichen es, sowohl für ansteigende als auch für abfallende Signale die gleiche Rampensteilheit vorzusehen. Der im Anspruch 18 angegebene Kondensator vermeidet ein undefiniertes Schwingverhalten, wenn dem Rampenbildner kleine Eingangssignale zugeführt werden. Damit der Nutzanteil der Ausgangsspannung des Sensors durch den Rampenbildner nicht verfälscht wird, ist die Rampensteilheit gemäß dem Anspruch 19 in vorteilhafter Weise so gewählt, daß sie größer als die maximale Steilheit des Nutzsignals ist. Dabei ist jedoch zu beachten, daß die Rampensteilheit im Sinne einer besseren Begrenzung von Störimpulsen möglichst klein gewählt wird. Eine zusätzliche Glättung von Oberwellen der Ausgangsspannung des Rampenbildners erfolgt gemäß den.Ansprüchen 20 bis 22 durch nachgeschaltete lineare Filter, z. B. in Form von aktiven Tiefpaßfiltern, die in vorteilhafter Weise als Besselfilter ausgebildet sind. Diese Filter lassen sich anders als nichtlineare Filter auf einfache Weise so dimensionieren, daß die Grenzfrequenz einen gewünschten Wert aufweist. Eine Anpassungsschaltung gemäß dem Anspruch 23 verstärkt das Ausgangssignal des Sensors. Eine weitere Anpassungsschaltung gemäß dem Anspruch 24 ermöglicht die Verwendung unterschiedlicher Bezugspotentiale für den Sensor und für die diesem nachgeschaltete Schaltungsanordnung. Im Anspruch 25 ist eine vorteilhafte Ausgestaltung einer Anpassungsschaltung nach den Ansprüchen 23 oder 24 angegeben, die symmetrische Störungen der Ausgangsspannung des Sensors unterdrückt. In den Ansprüchen 26 und 27 sind verschiedene Ausgestaltungen eines Sensors zur Erfassung der nichtelektrischen Größe angegeben.

Die Erfindung wird im Folgenden mit ihren weiteren Einzelheiten anhand von in den Zeichnungen dargestellten Ausführungsbeispielen näher erläutert. Es zeigen
- Figur 1: einen von einem Oszillator gespeisten Sensor, der als induktiver Wegaufnehmer ausgebildet ist, und eine erste, diesem nachgeschaltete Schaltungsanord- nung zur Gleichrichtung der Ausgangsspannung des Wegaufnehmers gemäß der Erfindung,
- Figur 2: einen nichtinvertierenden Rampenbildner,
- Figur 3: eine Ausgestaltung des in der Figur 2 dargestellten nichtinvertierenden Rampenbildners,
- Figur 4: eine zweite erfindungsgemäße Schaltungsanordnung zur Gleichrichtung der Ausgangsspannung eines von einem Oszillator gespeisten Sensors mit einem Ram- penbildner, der ausgehend von dem in der Figur 3 dargestellten Rampenbildner von nichtinvertierendem auf invertierendes Übertragungsverhalten umschalt- bar ist,
- Figur 5: einen als induktiver Wegaufnehmer ausgebildeten Sensor, der von einem Oszillator gespeist ist, einen gegenüber der Figur 4 weitergebildeten Ram- penbildner und ein diesem nachgeschaltetes lineares Filter,
- Figur 6: eine Anpassungsschaltung, die zwischen einem als induktiven Wegaufnehmer ausgebildeten Sensor und einer Schaltungsanordnung zur Gleichrichtung der ihr zugeführten Spannung angeordnet ist und
- Figur 7: einen Sensor in Form eines kapazitiven Wegaufneh- mers und eine diesem nachgeschaltete Anpassungs- schaltung.

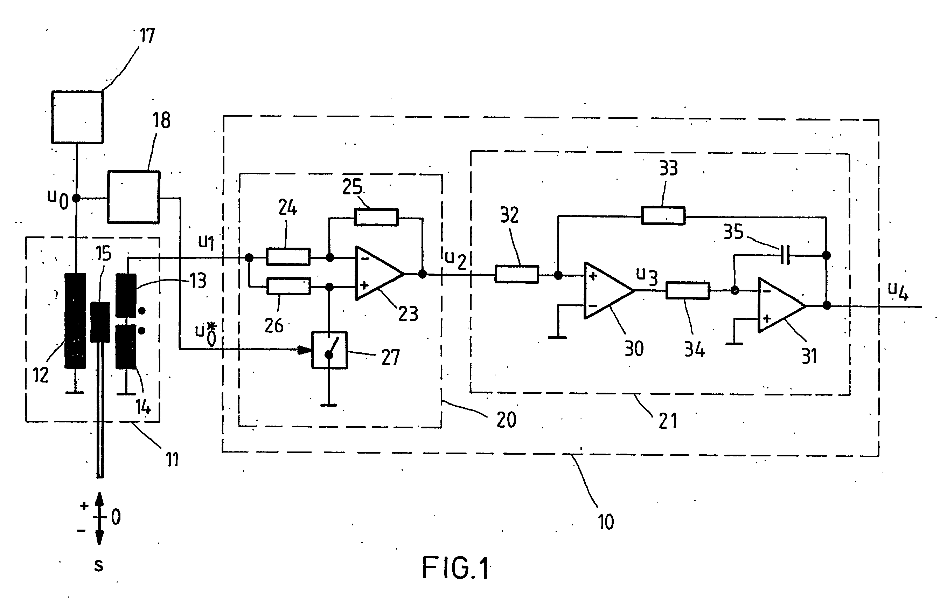

Die Figur 1 zeigt das Prinzipschaltbild eines Wegmeßumformers mit einer ersten gleichrichtenden und rampenbildenden Schaltungsanordnung 10 gemäß der Erfindung. Derartige Wegmeßumformer werden z. B. verwendet, um die Auslenkung des Steuerkolbens eine pneumatischen oder hydraulischen Ventils aus seiner Mittellage in ein elektrisches Signal umzuformen. Der Schaltungsanordnung 10 ist die Ausgangsspannung u₁ eines Sensors in Form eines induktiven Wegaufnehmers 11 zugeführt. Der Wegaufnehmer 11 ist mit einer Primärwicklung 12 und zwei Sekundärwicklungen 13 und 14 versehen. Zwischen der Primärwicklung 12 und den Sekundärwicklungen 13, 14 ist ein verschiebbarer ferromagnetischer Kern 15 angeordnet, dessen Position mit s bezeichnet ist. Der Kern 15 ist aus seiner in der Figur 1 dargestellten Mittellage nach oben oder nach unten auslenkbar. In der Mittellage des Kerns 15 ist s = 0. Auslenkungen nach oben werden im Folgenden als positive Werte von s bezeichnet. Entsprechend werden Auslenkungen nach unten als negative Werte von s bezeichnet. Der Primärwicklung 12 ist die Ausgangsspannung u₀ eines Oszillators 17 zugeführt, deren zeitlicher Verlauf in diesem Ausführungsbeispiel sinusförmig sei. Möglich ist aber auch z. B. ein dreieckförmiger oder rechteckförmiger Verlauf der Ausgangsspannung u₀. des Oszillators 17. Die Windungen der Sekundärwicklungen 13 und 14 sind so angeordnet, daß die in ihnen indüzierten Spannungen gegeneinander gerichtet sind. Befindet sich bei s = 0 der Kern 15 in der Mittellage, sind die in den Sekundärwicklungen 13 und 14 induzierten Spannungen betragsmäßig gleich groß. Da die Spannungen der Sekundärwicklungen aber gegeneinander gerichtet sind, ist die Amplitude der resultierenden Spannung u₁ gleich Null. Betrachtet man zunächst eine positive Auslenkung des Kerns 15, so erhöht sich die Amplitude der Spannung u₁, wenn der Kern 15 weiter in positiver Richtung ausgelenkt wird. Die Spannung u₁ ist im Idealfall, also bei einem Wegaufnehmer in Form eines idealen Übertragers, mit der Spannung u₀ in Phase. In der Praxis kann jedoch in der Regel nicht von einem idealen Übertrager ausgegangen werden. Die Spannung u₁ ist daher in der Praxis um einen festen Winkel Δϕ, dessen Größe durch den Aufbau des Wegaufnehmers bestimmt ist, gegenüber der Spannung u₀ verschoben. Die Phasenverschiebung Δϕ ist unabhängig von der Größe der Auslenkung des Kerns 15 und liegt in einer Größenordnung von 10°. Bei negativer Auslenkung des Kerns 15 ist die Phasenlage der Spannung u₁ um 180° gegenüber dem Wert Δϕ, der sich bei positiver Auslenkung des Kerns 15 ergibt, verschoben. Es handelt es sich hier um eine Phasenverschiebung der Spannung u₁ gegenüber der Spannung u₀, die nur von der Richtung der Auslenkung des Kerns 15 abhängig ist. Bei der Auslenkung des Kerns 15 des Wegaufnehmers 11 kann es sich, wie in der Figur 1 dargestellt, um eine Längsbewegung aber z. B. auch um eine Drehbewegung handeln.

Die Ausgangsspannung u₀ des Oszillators 17 ist außerdem einem Signalformer 18 zugeführt. Der Signalformer 18 weist zusätzlich zu einer Komparatorfunktion eine Totzeit Δt auf. Der Signalformer 18 erzeugt in den Nulldurchgängen der Spannung u₀ ein Schaltsignal und verschiebt dessen Flanken um die Totzeit Δt. Die Dauer der Totzeit Δt ist dabei so bemessen, daß - unter Berücksichtigung der Frequenz der Spannung u₀ - die Flanken des resultierenden Schaltsignals, das im Folgenden mit u₀* bezeichnet ist, gegenüber den Nulldurchgängen der Spannung u₀ um den Winkel Δϕ verschoben ist. Dies bedeutet, daß die Flanken des Schaltsignals u₀* mit den Nulldurchgängen des Nutzsignalanteils der Spannung u₁ übereinstimmen. Diese Art der Erzeugung des Schaltsignals u₀* hat gegenüber einer direkten Erzeugung des Schaltsignals aus der Spannung u₁ den Vorteil, daß die Phasenlage des Schaltsignals eindeutig an die Spannung u₀ gekoppelt ist und daß auch dann ein als Schaltsignal geeignetes Signal zur Verfügung steht, wenn die Amplitude der Spannung u₁ sehr klein oder gleich Null ist.

Die in der Figur 1 dargestellte rampenbildende Schaltungsanordnung 10 besteht aus einer Verstärkerschaltung 20 mit steuerbarem Vorzeichen des Verstärkungsfaktors und einem dieser nachgeschalteten Rampenbildner 21 mit invertierendem Übertragungsverhalten. Die Verstärkerschaltung 20 weist einen Operationsverstärker 23 auf, dessen Ausgangsspannung mit u₂ bezeichnet ist. Die Spannung u₂ ist.gleichzeitig die Ausgangsspannung der Verstärkerschaltung.20. Dem invertierenden Eingang des Operationsverstärkers 23 sind die Spannung u₁ über einen Widerstand 24 und die Spannung u₂ über einen Widerstand 25 zugeführt. Dem nichtinvertierenden Eingang des Operationsverstärkers 23 ist die Spannung u₁ über einen Widerstand 26 zugeführt. Zusätzlich ist zwischen dem nichtinvertierenden Eingang des Operationsverstärkers 23 und Bezugspotential ein elektronischer Schalter 27 angeordnet. Dem elektronischen Schalter 27 ist das Schaltsignal u₀* als Steuersignal zugeführt. Bei geschlossenem Schalter 27 ist der nichtinvertierende Eingang des Operationsverstärkers 23 mit Bezugspotential verbunden. Die Verstärkerschaltung 20 verhält sich bei geschlossenem Schalter 27 wie ein invertierender Verstärker. Sind die Widerstände 24 und 25 gleich groß gewählt, beträgt der Verstärkungsfaktor V = -1, d. h. für die Spannung u₂ gilt die Beziehung u₂ = -u₁. Ist dagegen der Schalter 27 geöffnet, verhält sich die Verstärkerschaltung 20 wie ein nichtinvertierender Verstärker mit dem Verstärkungsfaktor V =.+1, d. h. für die Spannung u₂ gilt die Beziehung u₂ = u₁.

Der Rampenbildner 21 weist zwei Operationsverstärker 30 und 31 auf, deren Ausgangsspannungen mit u₃ bzw. u₄ bezeichnet sind. Die Spannung u₄ ist gleichzeitig die Ausgangsspannung des Rampenbildners 21 sowie der rampenbildenden Schaltungsanordnung 10. Dem nichtinvertierenden Eingang des operationsverstärkers 30 sind die Spannung u₂ über einen Widerstand 32 und die Spannung u₄ über einen Widerstand 33 zugeführt. Damit die Spannungen u₂ und u₄ im eingeschwungenen Zustand betragsmäßig gleich groß sind, sind die Widerstände 32 und 33 gleich groß gewählt. Der invertierende Eingang des Operationsverstärkers 30 ist mit Bezugspotential verbunden. Dem invertierenden Eingang des Operationsverstärkers 31 sind die Spannung u₃ über einen Widerstand 34 und die Spannung u₄ über einen Kondensator 35 zugeführt. Der nichtinvertierende Eingang des Operationsverstärkers 31 ist mit Bezugspotential verbunden. Der Operationsverstärker 31, der Widerstand 34 und der Kondensator 35 bilden in an sich bekannter Weise einen Integrator. Die Anstiegsgeschwindigkeit der Spannung u₄ ist durch die Größe des Widerstands 34 und des Kondensators 35, die die Zeitkonstante des Integrators bilden, und die Höhe der dem Widerstand 34 zugeführten Spannung u₃ bestimmt. Bei einer sprungförmigen Änderung der Spannung u₂ ist die Spannung u₃ gleich der positiven oder der negativen Versorgungsspannung des Operationsverstärkers 30, je nachdem ob die Differenz zwischen den Spannungen u₂ und u₄ positiv oder negativ ist. Die Spannung u₄ folgt der Spannung u₂ nach einer Rampenfunktion, bis die Spannung u₄ - wegen des invertierenden Übertragungsverhaltens des Rampenbildners 21 - gleich -u₂ ist. Eine Begrenzung von in der Spannung u₂ enthaltenen Störsignalen erfolgt erfindungsgemäß durch den Rampenbildner 21. Diese Begrenzung ist besonders bei nadelförmig ausgebildeten Störsignalen wirksam. Die Rampensteilheit des Rampenbildners 21 ist so gewählt, daß sie im Hinblick auf.eine wirksame Begrenzung von Störungen möglichst klein ist, jedoch im Hinblick auf eine im Wesentlichen unbeeinflußte Weiterleitung des Nutzsignals der Ausgangsspannung u₁ des Wegaufnehmers 11 größer als die maximale Steilheit des Nutzsignals ist. Zur Verringerung von Nullpunktfehlern kann zwischen den invertierenden Eingang des Operationsverstärkers 30 und Bezugspotential sowie zwischen den nichtinvertierenden Eingang des Operationsverstärkers 31 und Bezugspotential je ein in der Figur 1 nicht dargestellter Widerstand.geschaltet werden.

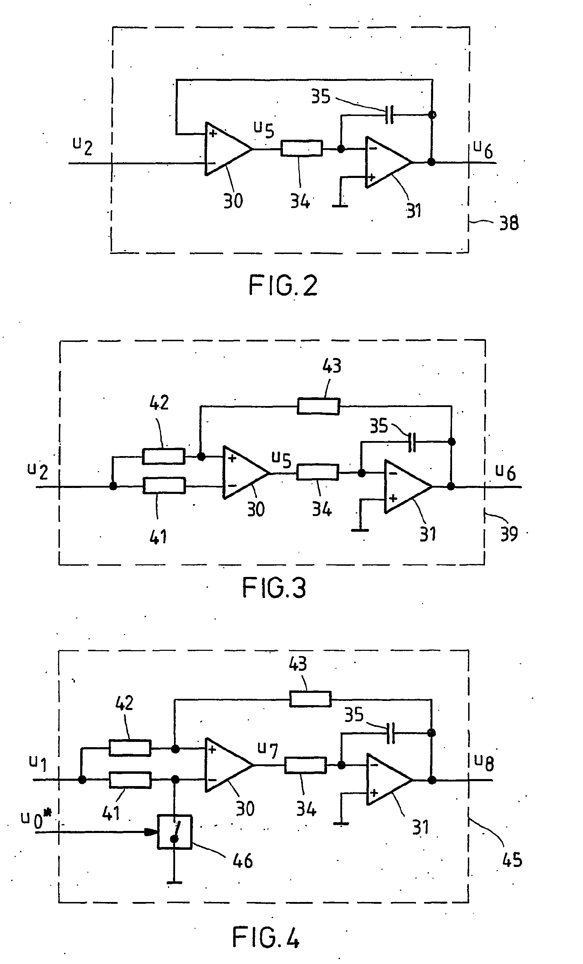

Die Figur 2 zeigt einen Rampenbildner 38 mit nichtinvertierendem Übertragungsverhalten, der anstelle des in der Figur 1 dargestellten Rampenbildners 21 mit invertierendem Übertragungsverhalten einsetzbar ist. Soweit in der Figur 2 dargestellte Bauteile mit denen der Figur 1 übereinstimmen, sind sie mit den gleichen Bezugszeichen versehen. Die Spannung u₂ ist dem invertierenden Eingang des Operationsverstärkers 30 direkt zugeführt. Da der Rampenbildner 38 nichtinvertierendes Übertragungsverhalten aufweist, ist die Ausgangsspannung des Operationsverstärkers 31, die zugleich die Ausgangsspannung des Rampenbildners 38 ist, nicht mit u₄ sondern mit u₆ bezeichnet. Aus dem gleichen Grund ist die Ausgangsspannung des Operationsverstärkers 30 nicht mit u₃ sondern mit u₅ bezeichnet. Zur Verringerung von Nullpunktfehlern kann zwischen den nichtinvertierenden Eingang des Operationsverstärkers 31 und Bezugspotential ein in der Figur 2 nicht dargestellter Widerstand geschaltet werden.

Die Figur 3 zeigt einen weiteren Rampenbildner 39 mit nichtinvertierendem Übertragungsverhalten. Gegenüber dem in der Figur 2 dargestellten Rampenbildner 38 sind drei weitere Widerstände 41, 42 und 43 vorgesehen. Diese drei Widerstände bewirken keine grundsätzliche Änderung des Übertragungsverhaltens des Rampenbildners 39 gegenüber demjenigen des Rampenbildners 38. Für die Ausgangsspannungen der Operationsverstärker 30 und 31 werden deshalb wie in der Figur 2 die Bezeichnungen u₅ bzw. u₆ verwendet. Da über den Widerstand 41 kein Strom fließt, fällt an ihm keine Spannung ab, so daß die dem invertierenden Eingang des Operationsverstärkers 30 zugeführte Spannung auch in diesem Fall gleich u₂ ist. Die dem nichtinvertierenden Eingang des Operationsverstärkers 30 zugeführte Spannung stellt sich so ein, daß sie gleich der dem invertierenden Eingang zugeführten Spannung u₂ ist. Dies ist dann der Fall, wenn die Spannung u₆ gleich der Spannung u₂ ist. Wie unten anhand der Figur 4 im Einzelnen erläutert ist, erhält man einen Rampenbildner mit invertierendem Übertragungsverhalten, wenn man den invertierenden Eingang des Operationsverstärkers 30 mit Bezugspotential verbindet. Bis auf den Widerstand 41, an dem in diesem Fall die Spannung u₂ abfällt, entspricht ein derartiger Rampenbildner dem in der Figur 1 dargestellten Rampenbildner 21. Auch in dieser Schaltungsanordnung kann zur Verringerung von Nullpunktfehlern zwischen den nichtinvertierenden Eingang des Operationsverstärkers 31 und Bezugspotential ein in der Figur 3 nicht dargestellter Widerstand geschaltet werden.

Die Figur 4 zeigt einen von nichtinvertierendem auf invertierendes Übertragungsverhalten umschaltbaren Rampenbildner 45, dessen Ausgangsspannung mit u₈ bezeichnet ist. Bei diesem Rampenbildner handelt es sich um eine Ausgestaltung des in der Figur 3 dargestellten Rampenbildners 39, bei dem zusätzlich ein elektronischer Schalter 46 zwischen dem invertierenden Eingang des Operationsverstärkers 30 und Bezugspotential angeordnet ist. Ist der Schalter 46 geschlossen, weist der Rampenbildner 45 invertierendes Übertragungsverhalten auf, d. h. das Vorzeichen der Spannung u₈ ist entgegengesetzt zu dem Vorzeichen der dem Rampenbildner 45 als Eingangsspannung zugeführten Spannung u₁ gerichtet. Ist der Schalter 46 dagegen geöffnet, weist der. Rampenbildner 45 nichtinvertierendes Übertragungsverhalten auf, d. h. das Vorzeichen der Spannung u₈ ist gleich dem Vorzeichen der Spannung u₁. Damit die Spannungen u₁ und u₈ auch bei invertierendem Übertragungsverhalten im eingeschwungenen Zustand betragsmäßig gleich groß sind, sind die Widerstände 42 und 43 gleich groß gewählt. Da - wie oben ausgeführt - das Vorzeichen des Übertragungsverhaltens des Rampenbildners 45 umschaltbar ist, kann die aus der Verstärkerschaltung 20 und einem der Rampenbildner 21 oder 38 ohne Vorzeichenumschaltung gebildete rampenbildende Schaltungsanordnung 20 durch den gesteuerten Rampenbildher 45 ersetzt werden, bei dem die Umschaltung des Vorzeichen des Übertragungsverhaltens bereits in den Rampenbildner integriert ist. Da in diesem Fall die in der Figur 1 dargestellte Verstärkerschaltung 20 nicht erforderlich ist, ist dem Rampenbildner 45 die Ausgangsspannung u₁ des Wegaufnehmers 11 als Eingangsspannung zugeführt. Die Steuerung des Schalters 46 und damit des Vorzeichens des Übertragungsverhaltens des Rampenbildners 45 erfolgt durch das Schaltsignal u₀*. Auch in dieser Schaltungsanordnung kann zur Verringerung von Nullpunktfehlern zwischen den nichtinvertierenden Eingang des Operationsverstärkers 31 und Bezugspotential ein in der Figur 4 nicht dargestellter Widerstand geschaltet werden.

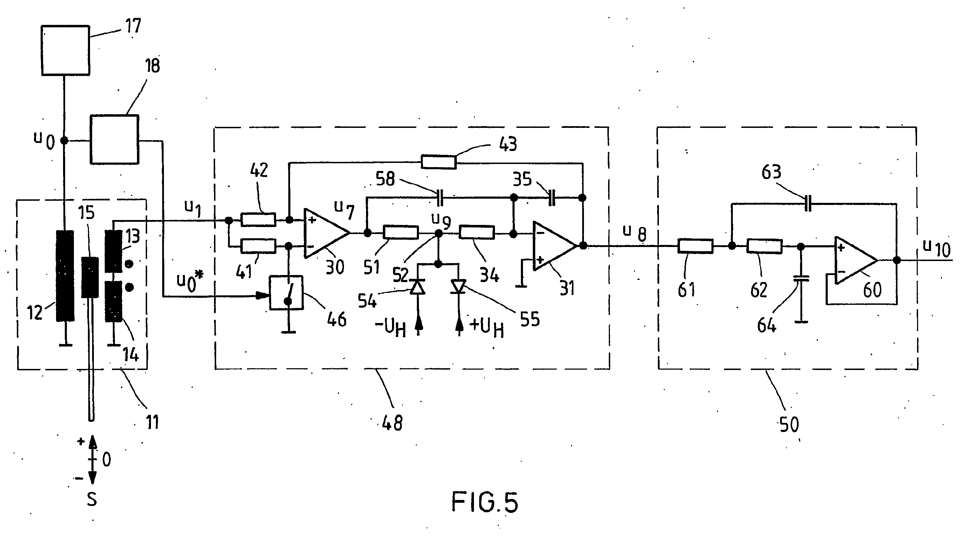

Die Figur 5 zeigt das Prinzipschaltbild eines weiteren Wegmeßumformers. Bei diesem Wegmeßumformer ist die Ausgangsspannung u₁ des von dem Oszillator 17 gespeisten induktiven Wegaufnehmers 11 einem erfindungsgemäßen Rampenbildner 48 zugeführt, bei dem das Vorzeichen des Übertragungsverhaltens steuerbar ist. Dem Rampenbildner 48 ist ein lineares Filter 50 nachgeschaltet. Bei dem Rampenbildner 48 handelt es sich um eine Ausgestaltung des in der Figur 4 dargestellten Rampenbildners 45. Soweit in der Figur 5 dargestellte Bauteile mit denen der Figuren 1 und 4 übereinstimmen, sind sie mit den gleichen Bezugszeichen wie dort versehen. Zwischen dem Ausgang des Operationsverstärkers 30 und dem Widerstand 34 ist ein weiterer Widerstand 51 angeordnet. Der Verbindungspunkt der beiden Widerstände ist mit dem Bezugszeichen 52 versehen. Der Schaltungspunkt 52 ist über eine Diode 54 mit einer negativen Hilfsspannung -U_{H} und über eine weitere Diode 55 mit einer betragsmäßig gleich großen positiven Hilfsspannung +U_{H} verbunden. Die Hilfsspannungen -U_{H} und +U_{H} begrenzen die mit u₉ bezeichnete Spannung an dem Schaltungspunkt 52, die dem aus dem Operationsverstärker 31, dem Widerstand 34 und dem Kondensator 35 gebildeten Integrator zugeführt ist, auf einen Wert, der bei negativem Vorzeichen der Spannung u₇ um die Durchlaßspannung der Diode 54 kleiner als die Hilfsspannung -U_{H} und bei positivem Vorzeichen der Spannung u₇ um die Durchlaßspannung der Diode 55 größer als die Hilfsspannung +U_{H} ist. Damit ist dafür gesorgt, daß die Rampensteilheit sowohl für ansteigende als auch für abfallende Signale gleich groß ist. Der Betrag der Hilfsspannungen -U_{H} und +U_{H} ist kleiner gewählt als die Spannung u₇ bei Übersteuerung des Operationsverstärkers 30. Parallel zu der Reihenschaltung der Widerstände 34 und 51 ist ein Kondensator 58 angeordnet. Der Kondensator 58 vermeidet ein undefiniertes Schwingverhalten des Rampenbildners 48, wenn die seinem Eingang zugeführten Signale klein sind. Zur Verringerung von Nullpunktfehlern kann zwischen den nichtinvertierenden Eingang des Operationsverstärkers 31 und Bezugspotential ein in der Figur 5 nicht dargestellter Widerstand geschaltet werden. Bei der Spannung u₈ handelt es sich um eine Gleichspannung, der Oberwellen mit der doppelten Frequenz der Ausgangsspannung u₀ des Oszillators 17 überlagert sind. Das dem Rampenbildner 48 nachgeschaltete lineare Filter 50 glättet diese Oberwellen der Spannung u₈ in an sich bekannter Weise. Bei dem Filter 50 handelt es sich um ein aktives Tiefpaßfilter zweiter Ordnung mit Einfachmitkopplung, das vorzugsweise als Besselfilter ausgebildet ist. Das Filter 50 enthält einen Operationsverstärker 60, zwei Widerstände 61 und 62 sowie zwei Kondensatoren 63 und 64. Ein derartiges Filter ist z. B. aus dem Buch von Tietze - Schenk "Halbleiter-Schaltungstechnik", Springer-Verlag 1986, 8. überarbeitete Auflage, Seiten 405 bis 407, insbesondere Abb. 14.22 auf Seite 406, bekannt. Die Ausgangsspannung des Tiefpaßfilters 50 ist mit u₁₀ bezeichnet. Die Spannung u₁₀ ist ein Maß für die Auslenkung des Kerns 15 des induktiven Wegaufnehmers 11. Die Polarität der Spannung u₁₀ ist dabei ein Maß für die Richtung der Auslenkung und die Höhe der Spannung u₁₀ ist ein Maß für die Größe der Auslenkung des Kern 15 aus seiner Mittelstellung. Ist eine stärkere Glättung der Oberwellen erforderlich, können dem.Filter 50 weitere derartige Filter nachgeschaltet werden.

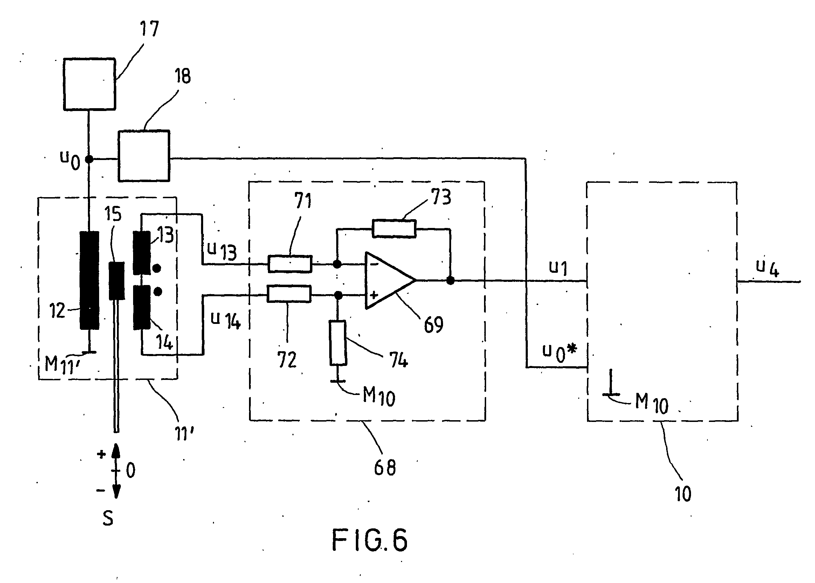

Die Figur 6 zeigt eine Abwandlung der in der Figur 1 dargestellten Schaltungsanordnung. Zwischen einem induktiven Wegaufnehmer 11' und der rampenbildenden Schaltungsanordnung 10 ist eine Anpassungsschaltung 68 angeordnet. Die Anpassungsschaltung 68 weist einen Operationsverstärker 69 sowie vier Widerstände 71, 72, 73 und 74 auf. Die Anpassungsschaltung 68 sowie die rampenbildende Schaltungsanordnung 10 besitzen ein anderes Bezugspotential als der Wegaufnehmer 11'. In der

Figur 6 ist das Bezugspotential der rampenbildenden Schaltungsanordnung 10 mit M₁₀ bezeichnet, das Bezugspotential des Wegaufnehmers 11' ist mit'M₁₁' bezeichnet. Die Anpassungsschaltung 68 besitzt dasselbe Bezugspotential M₁₀ wie die rampenbildenden Schaltungsanordnung 10. Die mit u₁₃ und u₁₄ bezeichneten Ausgangsspannungen des Wegaufnehmers 11' sind den Widerständen 71 bzw. 72 als Eingangsspannung zugeführt. Die Anpassungsschaltung 68 formt die Differenz zwischen den Spannungen u₁₃ und u₁₄ in die Spannung u₁ um, die auf das Bezugspotential M₁₀ bezogen ist. Die Spannungen u₁ und u₀* sind wie in der Figur 1 dem Eingang der rampenbildenden Schaltungsanordnung 10 zugeführt. Die Ausgangsspannung der rampenbildenden Schaltungsanordnung 10 ist wie in der Figur 1 mit u₄ bezeichnet. Die Anpassungsschaltung 68 entkoppelt die Bezugspotentiale des Wegaufnehmers 11' und der rampenbildenden Schaltüngsanordnung 10. Dabei bestimmt das Verhältnis der Widerstände 71 und 73 den Verstärkungsfaktor der Anpassungsschaltung 68. Der Verstärkungsfaktor kann sowohl Werte kleiner als 1 als auch größer als 1 sowie gleich 1 annehmen. Der Verstärkungsfaktor erlaubt eine Normierung der Signalpegel. Alternativ zu der in der Figur 1 dargestellten rampenbildenden Schaltungsanordnung 10 kann in der Figur 6 die in der Figur 5 dargestellte rampenbildende Schaltungsanordnung 48 eingesetzt werden.

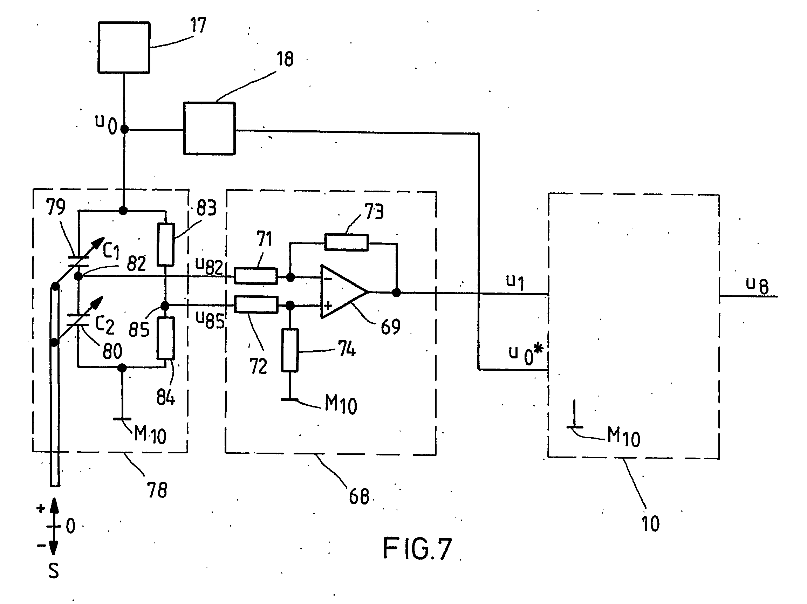

Die Figur 7 zeigt eine der Figur 6 entsprechende Schaltungsanordnung, bei der der Sensor für die nichtelektrische Größe als kapazitiver Wegaufnehmer 78 ausgebildet ist. Der kapazitive Wegaufnehmer 78 ist von der Ausgangsspannung u₀ des Oszillators 17 gespeist. Der kapazitive Wegaufnehmer 78 weist zwei in Reihe geschaltete Kondensatoren 79 und 80 auf. Die Kapazität der Kondensatoren ist mit C₁ bzw. C₂ bezeichnet. Der gemeinsame Schaltungspunkt der Kondensatoren 79 und 80 ist mit dem Bezugszeichen 82 versehen. Die nichtelektrische Größe in Form eines Wegs s lenkt die Elektroden der Kondensatoren 79 und 80 mechanisch derart aus, daß sich ihre Kapazitäten C₁ und C₂ entsprechend der Auslenkung gegenläufig ändern. Die Spannung des Schaltungspunktes 82 ist mit u₈₂ bezeichnet. Sie ändert sich entsprechend dem Weg s. Parallel zu den Kondensatoren 79 und 80 ist die Reihenschaltung von zwei Widerständen 83 und 84 angeordnet. Der gemeinsame Schaltungspunkt der Widerstände 83 und 84 ist mit dem Bezugszeichen 85 versehen. Die Spannung des Schaltungspunktes 85 ist mit u₈₅ bezeichnet. Sie ist durch das Verhältnis der Widerstände 83 und 84 bestimmt. Die Ausgangsspannung des kapazitiven Wegaufnehmers 78 ist durch die Differenz der Spannungen u₈₂ und u₈₅ bestimmt. Die Spannungen u₈₂ und u₈₅ sind der Anpassungsschaltung 68 zugeführt. Die Anpassungsschaltung 68 bildet aus den Spannungen u₈₂ und u₈₅ die Spannung u₁, die der rampenbildenden Schaltungsanordnung 10 als Eingangsspannung zugeführt ist. Die Spannung u₁ entspricht somit der Differenz der Spannungen u₈₂ und u₈₅. In diesem Ausführungsbeispiel ist das Bezugspotential.des Wegaufnehmers 78 gleich dem Bezugspotential M₁₀ der rampenbildenden Schaltungsanordnung 10 und der Anpassungsschaltung 68. Alternativ zu der in der Figur 1 dargestellten rampenbildenden Schaltungsanordnung 10 kann auch in der Figur 7 die in der Figur 5 dargestellte rampenbildende Schaltungsanordnung 48 eingesetzt werden.

## Patentansprüche

1. Schaltungsanordnung zur Gleichrichtung der Ausgangsspannung eines von einem Oszillator gespeisten Sensors für eine nichtelektrische Größe, deren Amplitude und Phasenlage ein Maß für die nichtelektrische Größe ist, **dadurch gekennzeichnet,**
- **daß** die Ausgangsspannung (u₁) des Sensors (11) einer rampenbildenden Schaltungsanordnung (10; 45; 48) zugeführt ist,
- **daß** das Vorzeichen des Übertragungsverhaltens der rampenbildenden Schaltungsanordnung (10; 45; 48) steuerbar ist und
- **daß** die Steuerung des Vorzeichens des Übertragungsverhaltens der rampenbildenden Schaltungsanordnung (10; 45; 48) durch ein Schaltsignal (u₀*) erfolgt, dessen Flanken mit den Nulldurchgängen der Ausgangsspannung (u₁) des Sensors (11) übereinstimmen.

2. Schaltungsanordnung nach Anspruch 1, **dadurch gekennzeichnet, daß** ein Signalformer (18) mit Komparatorfunktion und Totzeit die Ausgangsspannung (u₀) des Oszillators (17) in das Schaltsignal (u₀*) umformt.

3. Schaltungsanordnung nach Anspruch 2, **dadurch gekennzeichnet, daß** die Totzeit des Signalformers (18) die Phasenlage des Schaltsignals (u₀*) derart um einen Winkel gegenüber der Ausgangsspannung (u₀) des Oszillators (17) verschiebt, daß die Flanken des Schaltsignals (u₀*) mit den Nulldurchgängen der Ausgangsspannung (u₁) des Sensors (11) übereinstimmen.

4. Schaltungsanordnung nach Anspruch.2 oder Anspruch 3, **dadurch gekennzeichnet,**
- **daß** die Ausgangsspannung (u₁) des Sensors (11) einer Verstärkerschaltung (20) mit steuerbarem Vorzeichen des Verstärkungsfaktors zugeführt ist,
- **daß** das Vorzeichen des Verstärkungsfaktors der Verstärkerschaltung (20) in Abhängigkeit von dem Schaltsignal (u₀*) gesteuert ist und
- **daß** der Verstärkerschaltung (20) ein Rampenbildner (21; 38) nachgeschaltet ist, bei dem keine Vorzeichenumschaltung erfolgt.

5. Schaltungsanordnung nach Anspruch 4, **dadurch gekennzeichnet,**
- **daß** die Ausgangsspannung (u₁) des Sensors (11) dem invertierenden Eingang eines ersten Operationsverstärkers (23) über einen ersten Widerstand (24) zugeführt ist,
- **daß** die Ausgangsspannung (u₂) des ersten Operationsverstärkers (23) seinem invertierenden Eingang über einen zweiten Widerstand (25) zugeführt ist,
- **daß** die Ausgangsspannung (u₁) des Sensors (11) dem nichtinvertierenden Eingang des ersten Operationsverstärkers (23) über einen dritten Widerstand (26) zugeführt ist und
- **daß** der nichtinvertierende Eingang des ersten Operationsverstärkers (23) über einen von einem Schaltsignal (u₀*) gesteuerten Schalter (27) mit Bezugspotential verbunden ist.

6. Schaltungsanordnung nach Anspruch 5, **dadurch gekennzeichnet, daß**'der erste (24) und der zweite (25) Widerstand gleich groß sind.

7. Schaltungsanordnung nach einem der Ansprüche 4 bis 6, **dadurch gekennzeichnet, daß** der Rampenbildner (21) invertierendes Übertragungsverhalten aufweist.

8. Schaltungsanordnung nach Anspruch 7, **dadurch gekennzeichnet,**
- **daß** der Rampenbildner (21) einen zweiten (30) und einen dritten (31) Operationsverstärker aufweist,
- **daß** dem nichtinvertierenden Eingang des zweiten Operationsverstärkers (30) die Ausgangsspannung (u₂) der Verstärkerschaltung (20) über einen vierten Widerstand (32) und die Ausgangsspannung (u₄) des dritten Operationsverstärkers (31) über einen fünften Widerstand (33) zugeführt sind,
- **daß** der invertierende Eingang des zweiten Operationsverstärkers (30) mit Bezugspotential verbunden ist,
- **daß** dem invertierenden Eingang des dritten Operationsverstärkers (31) seine Ausgangsspannung (u₄) über einen Kondensator (35) und die Ausgangsspannung (u₃) des zweiten Operationsverstärkers (30) über einen sechsten Widerstand (34) zugeführt sind und
- **daß** der nichtinvertierende Eingang des dritten Operationsverstärkers (31) mit Bezugspotential verbunden ist.

9. Schaltungsanordnung nach Anspruch 8, **dadurch gekennzeichnet, daß** der vierte (32) und der fünfte (33) Widerstand gleich groß sind.

10. Schaltungsanordnung nach einem der Ansprüche 4 bis 6, **dadurch gekennzeichnet, daß** der Rampenbildner (38) nichtinvertierendes Übertragungsverhalten aufweist.

11. Schaltungsanordnung nach Anspruch 10, **dadurch gekennzeichnet,**
- **daß** der Rampenbildner (38) einen zweiten (30) und einen dritten (31) Operationsverstärker aufweist,
- **daß** dem invertierenden Eingang des zweiten Operationsverstärkers (30) die Ausgangsspannung (u₂) der Verstärkerschaltung (20) zugeführt ist,
- **daß** dem nichtinvertierenden Eingang des zweiten Operationsverstärkers (30) die Ausgangsspannung (u₆) des Rampenbildners (38) zugeführt ist,
- **daß** dem invertierenden Eingang des dritten Operationsverstärkers (31) seine Ausgangsspannung (u₆) über einen Kondensator (35) und die Ausgangsspannung (u₅) des zweiten Operationsverstärkers (30) über einen sechsten Widerstand (34) zugeführt sind und
- **daß** der nichtinvertierende Eingang des dritten Operationsverstärkers (31) mit Bezugspotential verbunden ist.

12. Schaltungsanordnung nach Anspruch 10, **dadurch gekennzeichnet,**
- **daß** die Ausgangsspannung (u₂) der Verstärkerschaltung (20) dem invertierenden Eingang des zweiten Operationsverstärkers (30) über einen siebten Widerstand (41) zugeführt ist,
- **daß** die Ausgangsspannung (u₂) der Verstärkerschaltung (20) dem nichtinvertierenden Eingang des zweiten Operationsverstärkers (30) über einen achten Widerstand (42) zugeführt ist,
- **daß** zwischen dem Ausgang des dritten Operationsverstärkers (31) und dem nichtinvertierenden Eingang des zweiten Operationsverstärkers (30) ein neunter Widerstand (43) angeordnet ist,
- **daß** dem invertierenden Eingang des dritten Operationsverstärkers (31) seine Ausgangsspannung (u₆) über einen kondensator (35) und die Ausgangsspannung (u₅) des zweiten Operationsverstärkers (30) über einen sechsten Widerstand (34) zugeführt sind und
- **daß** der nichtinvertierende Eingang des dritten Operationsverstärkers (31) mit Bezugspotential verbunden ist.

13. Schaltungsanordnung nach Anspruch 12, **dadurch gekennzeichnet, daß** der achte (42) und der neunte (43) Widerstand gleich groß sind.

14. Schaltungsanordnung nach einem der Ansprüche 1 bis 3, **dadurch gekennzeichnet,**
- **daß** die Ausgangsspannung (u₁) des Sensors (11) einem gesteuerten Rampenbildner (45; 48) zugeführt ist, der zwischen invertierendem und nichtinvertierendem Übertragungsverhalten umschaltbar ist, und
- **daß** das Vorzeichen des Übertragungsverhaltens in Abhängigkeit von dem Schaltsignal (u₀*) gesteuert ist.

15. Schaltungsanordnung nach Anspruch 14, **dadurch gekennzeichnet,**
- **daß** der gesteuerte Rampenbildner (45) einen zweiten (30) und einen dritten (31) Operationsverstärker aufweist,
- **daß** die Ausgangsspannung (u₁) des Sensors (11) dem invertierenden Eingang des zweiten Operationsverstärkers (30) über einen siebten Widerstand (41) zugeführt ist,
- **daß** zwischen dem invertierenden Eingang des zweiten Operationsverstärkers (30) und Bezugspotential ein von dem Schaltsignal (u₀*) gesteuerter Schalter (46) angeordnet ist,
- **daß** die Ausgangsspannung (u₁) des Sensors (11) dem nichtinvertierenden Eingang des zweiten Operationsverstärkers (30) über einen achten Widerstand (42) zugeführt ist,
- **daß** die Ausgangsspannung (u₈) des gesteuerten Rampenbildners (45) dem nichtinvertierenden Eingang des zweiten Operationsverstärkers (30) über einen neunten Widerstand (43) zugeführt ist,
- **daß** dem invertierenden Eingang des dritten Operationsverstärkers (31) seine Ausgangsspannung (u₈) über einen Kondensator (35) und die Ausgangsspannung (u₇) des zweiten Operationsverstärkers (30) über einen sechsten Widerstand (34) zugeführt sind und
- **daß** der nichtinvertierende Eingang des dritten Operationsverstärkers (31) mit Bezugspotential verbunden ist.

16. Schaltungsanordnung nach Anspruch 15, **dadurch gekennzeichnet, daß** der achte (42) und der neunte (43) Widerstand gleich groß sind.

17. Schaltungsanordnung nach.Anspruch 15 oder Anspruch 16, **dadurch gekennzeichnet,**
- **daß** zwischen dem Ausgang des zweiten Operationsverstärkers (30) und dem sechsten Widerstand (34) ein zehnter Widerstand (51) angeordnet ist,
- **daß** der Verbindungspunkt (52) des zehnten Widerstands (51) mit dem sechsten Widerstand (34) über eine erste Diode (54) mit einer negativen Hilfsspannung (-U_{H}) und über eine zweite Diode (55) mit einer betragsmäßig gleich großen positiven Hilfsspannung (+U_{H}) verbunden ist und
- **daß** der Betrag der Hilfsspannungen (-U_{H}, +U_{H}) kleiner als der Betrag der Ausgangsspannung (u₇) des zweiten Operationsverstärkers (30) bei Übersteuerung ist.

18. Schaltungsanordnung nach Anspruch 17, **dadurch gekennzeichnet, daß** ein zweiter Kondensator (58) parallel zu der Reihenschaltung des sechsten (34) und des zehnten (51) Widerstands angeordnet ist.

19. Schaltungsanordnung nach einem der vorhergehenden Ansprüche, **dadurch gekennzeichnet, daß** die Rampensteilheit des Rampenbildners (21; 38; 45; 48) größer als die maximale Steilheit des Nutzsignals der Ausgangsspannung (u₁) des Sensors (11; 11'; 78) ist.

20. Schaltungsanordnung nach einem der vorhergehenden Ansprüche, **dadurch gekennzeichnet, daß** der rampenbildenden Schaltungsanordnung (10; 45; 48) mindestens ein lineares Filter (50) nachgeschaltet ist.

21. Schaltungsanordnung nach Anspruch 20, **dadurch gekennzeichnet, daß** das lineare Filter (50) ein aktives Tiefpaßfilter zweiter Ordnung mit Einfachmitkopplung ist.

22. Schaltungsanordnung nach Anspruch 20 oder Anspruch 21, **dadurch gekennzeichnet, daß** das lineare Filter (50) als Besselfilter ausgebildet ist.

23. Schaltungsanordnung nach einem der vorhergehenden Ansprüche, **dadurch gekennzeichnet, daß** zwischen dem Sensor (11'; 78) und der rampenbildenden Schaltungsanordnung (10) eine Anpassungsschaltung (68) angeordnet ist, die die Amplitude der Ausgangsspannung (u₁₃ - u₁₄; u₈₅ - u₈₂) des Sensors (11'; 78) verstärkt.

24. Schaltungsanordnung nach einem der vorhergehenden Ansprüche, **dadurch gekennzeichnet, daß** die Anpassungsschaltung (68) die Bezugspotentiale (M₁₁, bzw. M₁₀) von Sensor (11') und rampenbildender Schaltungsanordnung (10) entkoppelt.

25. Schaltungsanordnung nach Anspruch 23 oder Anspruch 24, **dadurch gekennzeichnet,**
- **daß** eine erste Ausgangsspannung (u₁₃) des Sensors (11') dem invertierenden Eingang eines vierten Operationsverstärkers (69) über einen elften Widerstand (71) zugeführt ist,
- **daß** eine zweite Ausgangsspannung (u₁₄) des Sensors (11') dem nichtinvertierenden Eingang des vierten Operationsverstärkers (69) über einen zwölften Widerstand (72) zugeführt ist,
- **daß** der Ausgang des vierten Operationsverstärkers (69) über einen dreizehnten Widerstand (73) mit dem invertierenden Eingang des vierten Operationsverstärkers (69) verbunden ist und
- **daß** der nichtinvertierende Eingang des vierten Operationsverstärkers (69) über einen vierzehnten Widerstand (74) mit Bezugspotential (M₁₀) verbunden ist.

26. Schaltungsanordnung nach einem der vorhergehenden Ansprüche, **dadurch gekennzeichnet, daß** der Sensor ein induktiver Wegaufnehmer (11; 11') ist und daß die Amplitude und die Phasenlage der Ausgangsspannung (u₁; u₁₃ - u₁₄) des Wegaufnehmers (11, 11') ein Maß für die Auslenkung (s) eines ferromagnetischen Kerns (15) ist.

27. Schaltungsanordnung nach einem der Ansprüche 1 bis 25, **dadurch gekennzeichnet, daß** der Sensor ein kapazitiver Wegaufnehmer (78) ist und daß die nichtelektrische Größe (s) eine Kapazität (C₁, C₂) des Wegaufnehmers (78) derart verändert, daß die Amplitude und die Phasenlage der Ausgangsspannung (u₈₅ - u₈₂) des Wegaufnehmers (78) ein Maß für die nichtelektrische Größe (s) ist.

## Claims

1. Circuit arrangement for rectifying the output voltage of a sensor supplied from an oscillator for a non-electrical variable, whose amplitude and phase angle is a measure of the non-electrical variable, **characterized**
- **by** the fact that the output voltage (u₁) of the sensor (11) is supplied to a ramp-generating circuit arrangement (10; 45; 48),
- by the fact that the mathematical sign of the transmission behavior of the ramp-generating circuit arrangement (10; 45; 48) can be controlled, and
- by the fact that the mathematical sign of the transmission behavior of the ramp-generating circuit arrangement (10; 45; 48) is controlled by a switching signal (u₀*), whose flanks correspond to the zero crossings of the output voltage (u₁) of the sensor (11).

2. Circuit arrangement according to Claim 1, **characterized by** the fact that a signal conditioner (18) uses the comparator function and dead time to convert the output voltage (u₀) of the oscillator (17) to the switching signal (u₀*).

3. Circuit arrangement according to Claim 2, **characterized by** the fact that the dead time of the signal conditioner (18) shifts the phase angle of the switching signal (u₀*) with respect to the output voltage (u₀) of the oscillator (17) through an angle such that the flanks of the switching signal (u₀*) correspond to the zero crossings of the output voltage (u₁) of the sensor(11).

4. Circuit arrangement according to Claim 2 or Claim 3, **characterized**
- **by** the fact that the output voltage (u₁) of the sensor (11) is supplied to an amplifier circuit (20) having a gain with a controllable mathematical sign,
- by the fact that the mathematical sign for the gain of the amplifier circuit (20) is controlled as a function of the switching signal (u₀*), and
- by the fact that a ramp generator (21; 38) is connected downstream of the amplifier circuit (20), no mathematical sign - inversion being carried out in the ramp generator (21; 38).

5. Circuit arrangement according to Claim 4,
**characterized**
- **by** the fact that the output voltage (u₁) of the sensor (11) is supplied to the inverting input of a first operational amplifier (23) via a first resistor (24),
- by the fact that the output voltage (u₂) of the first operational amplifier (23) is supplied to its inverting input via a second resistor (25),
- by the fact that the output voltage (u₁) of the sensor (11) is supplied to the non-inverting input of the first operational amplifier (23) via a third resistor (26), and
- by the fact that the non-inverting input of the first operational amplifier (23) is connected to the reference potential via a switch (27) which is controlled by a switching signal (u₀*).

6. Circuit arrangement according to Claim 5,
**characterized by** the fact that the first (24) and the second (25) resistor have the same resistance value.

7. Circuit arrangement according to one of Claims 4 to 6, **characterized by** the fact that the ramp generator (21) has an inverting transmission behavior.

8. Circuit arrangement according to Claim 7,
**characterized**
- **by** the fact that the ramp generator (21) has a second (30) and a third (31) operational amplifier,
- by the fact that the non-inverting input of the second operational amplifier (30) is supplied the output voltage (u₂) of the amplifier circuit (20) via a fourth resistor (32) and the output voltage (u₄) of the third operational amplifier (31) via a fifth resistor (33).
- by the fact that the inverting input of the second operational amplifier (30) is connected to the reference potential,
- by the fact that the inverting input of the third operational amplifier (31) is supplied its output voltage (u₄) via a capacitor (35) and the output voltage (u₃) of the second operational amplifier (30) via a sixth resistor (34), and
- by the fact that the non-inverting input of the third operational amplifier (31) is connected to the reference potential.

9. Circuit arrangement according to Claim 8, **characterized by** the fact that the fourth (32) and the fifth (33) resistor have the same resistance value.

10. Circuit arrangement according to one of Claims 4 to 6, **characterized by** the fact that the ramp generator (38) has a non-inverting transmission behavior.

11. Circuit arrangement according to Claim 10,
**characterized**
- **by** the fact that the ramp generator (38) has a second (30) and a third (31) operational amplifier,
- by the fact that the inverting input of the second operational amplifier (30) is supplied the output voltage (u₂) of the amplifier circuit (20),
- by the fact that the non-inverting input of the second operational amplifier (30) is supplied the output voltage (u₆) of the ramp generator (38),
- by the fact that the inverting input of the third operational amplifier (31) is supplied its output voltage (u₆) via a capacitor (35) and the output voltage (u₅) of the second operational amplifier (30) via a sixth resistor (34), and
- by the fact that the non-inverting input of the third operational amplifier (31) is connected to the reference potential.

12. Circuit arrangement according to Claim 10, **characterized**
- **by** the fact that the output voltage (u₂) of the amplifier circuit (20) is supplied to the inverting input of the second operational amplifier (30) via a seventh resistor (41),
- by the fact that the output voltage (u₂) of the amplifier circuit (20) is supplied to the non-inverting input of the second operational amplifier (30) via an eighth resistor (42),
- by the fact that a ninth resistor (43) is arranged between the output of the third operational amplifier (31) and the non-inverting input of the second operational amplifier (30),
- by the fact that the inverting input of the third operational amplifier (31) is supplied its output voltage (u₆) via a capacitor (35) and the output voltage (u₅) of the second operational amplifier (30) via a sixth resistor (34), and
- by the fact that the non-inverting input of the third operational amplifier (31) is connected to the reference potential.

13. Circuit arrangement according to Claim 12, **characterized by** the fact that the eighth (42) and the ninth (43) resistor have the same resistance value.

14. Circuit arrangement according to one of Claims 1 to 3, **characterized**
- **by** the fact that the output voltage (u₁) of the sensor (11) is supplied to a controlled ramp generator (45; 48), which can be changed over between inverting and non-inverting transmission behavior, and
- by the fact that the mathematical sign of the transmission behavior is controlled as a function of the switching signal (u₀*).

15. Circuit arrangement according to Claim 14,
**characterized**
- **by** the fact that the controlled ramp generator (45) has a second (30) and a third (31) operational amplifier,
- by the fact that the output voltage (u₁) of the sensor (11) is supplied to the inverting input of the second operational amplifier (30) via a seventh resistor (41),
- by the fact that a switch (46), which is controlled by the switching signal (u₀*), is arranged between the inverting input of the second operational amplifier (30) and the reference potential,
- by the fact that the output voltage (u₁) of the sensor (11) is supplied to the non-inverting input of the second operational amplifier (30) via an eighth resistor (42),
- by the fact that the output voltage (u₈) of the controlled ramp generator (45) is supplied to the non-inverting input of the second operational amplifier (30) via a ninth resistor (43),
- by the fact that the inverting input of the third operational amplifier (31) is supplied its output voltage (u₈) via a capacitor (35) and the output voltage (u₇) of the second operational amplifier (30) via a sixth resistor (34), and
- by the fact that the non-inverting input of the third operational amplifier (31) is connected to the reference potential.

16. Circuit arrangement according to Claim 15, **characterized by** the fact that the eighth (42) and the ninth (43) resistor have the same resistance value.

17. Circuit arrangement according to Claim 15 or Claim 16, **characterized**
- **by** the fact that a tenth resistor (51) is arranged between the output of the second operational amplifier (30) and the sixth resistor (34),
- by the fact that the connecting point (52) between the tenth resistor (51) and the sixth resistor (34) is connected, via a first diode (54), to a negative auxiliary voltage (-U_{H}) and, via a second diode (55), to a positive auxiliary voltage (+U_{H}) having the same value, and
- by the fact that the value for the auxiliary voltages (-U_{H}, +U_{H}) is smaller than the value for the output voltage (u₇) of the second operational amplifier (30) when it is overloaded.

18. Circuit arrangement according to Claim 17, **characterized by** the fact that a second capacitor (58) is arranged in parallel with the series circuit comprising the sixth (34) and the tenth (51) resistor.

19. Circuit arrangement according to one of the preceding claims, **characterized by** the fact that the ramp steepness of the ramp generator (21; 38; 45; 48) is greater than the maximum steepness of the useful signal of the output voltage (u₁) of the sensor (11; 11'; 78).

20. Circuit arrangement according to one of the preceding claims, **characterized by** the fact that at least one linear filter (50) is connected downstream of the ramp-generating circuit arrangement (10; 45; 48).

21. Circuit arrangement according to Claim 20, **characterized by** the fact that the linear filter (50) is an active, second-order bandpass filter having single positive feedback.

22. Circuit arrangement according to Claim 20 or Claim 21, **characterized by** the fact that the linear filter (50) is in the form of a Bessel filter.

23. Circuit arrangement according to one of the preceding claims, **characterized by** the fact that a matching circuit (68) is arranged between the sensor (11'; 78) and the ramp-generating circuit arrangement (10) and amplifies the amplitude of the output voltage (u₁₃ - u₁₄; u₈₅ - u₈₂) of the sensor (11'; 78).

24. Circuit arrangement according to one of the preceding claims, **characterized by** the fact that the matching circuit (68) isolates the reference potentials (M₁₁, and M₁₀, respectively) of the sensor (11') and the ramp-generating circuit arrangement (10).

25. Circuit arrangement according to Claim 23 or Claim 24, **characterized**
- **by** the fact that a first output voltage (u₁₃) of the sensor (11') is supplied to the inverting input of a fourth operational amplifier (69) via an eleventh resistor (71),
- by the fact that a second output voltage (u₁₄) of the sensor (11') is supplied to the non-inverting input of the fourth operational amplifier (69) via a twelfth resistor (72),
- by the fact that the output of the fourth operational amplifier (69) is connected to the inverting input of the fourth operational amplifier (69) via a thirteenth resistor (73), and
- by the fact that the non-inverting input of the fourth operational amplifier (69) is connected to the reference potential (M₁₀) via a fourteenth resistor (74).

26. Circuit arrangement according to one of the preceding claims, **characterized by** the fact that the sensor is an inductive movement sensor (11; 11'), and by the fact that the amplitude and the phase angle of the output voltage (u₁; u₁₃ - u₁₄) of the movement sensor (11, 11') is a measure of the deflection (s) of a ferromagnetic core (15).

27. Circuit arrangement according to one of Claims 1 to 25, **characterized by** the fact that the sensor is a capacitive movement sensor (78), and by the fact that the non-electrical variable (s) alters a capacitance (C₁, C₂) of the movement sensor (78) such that the amplitude and the phase angle of the output voltage (u₈₅ - u₈₂) of the movement sensor (78) is a measure of the non-electrical variable (s).

## Revendications

1. Agencement de commutation pour redresser la tension de sortie d'un capteur alimenté par un oscillateur pour une grandeur non électrique dont l'amplitude et la position de phase sert de mesure pour la grandeur non électrique, **caractérisé en ce que** :
- la tension de sortie (u₁) du capteur (11) est amenée à un agencement de commutation (10 ; 45 ; 48) formant une rampe ;
- le signe de polarité du comportement de transmission de l'agencement de commutation (10 ; 45 ; 48) formant une rampe peut être commandé ; et
- la commande du signe de polarité du comportement de transmission de l'agencement de commutation (10 ; 45 ; 48) formant une rampe se produit au travers d'un signal de commutation (u₀*) dont les côtés coïncident avec les passages à zéro de la tension de sortie (u₁) du capteur (11).

2. Agencement de commutation selon la revendication 1, **caractérisé en ce qu'**un élément de formation de signal (18) convertit, avec la fonction de comparaison et le temps mort, la tension de sortie (u₀) de l'oscillateur (17) en signal de commutation (u₀*).

3. Agencement de commutation selon la revendication 2, **caractérisé en ce que** le temps mort de l'élément de formation de signal (18) décale la position de phase du signal de commutation (u₀*) de telle sorte d'un certain angle par rapport à la tension de sortie (u₀) de l'oscillateur (17) que les côtés du signal de commutation (u₀*) coïncident avec les passages à zéro de la tension de sortie (u₁) du capteur (11).

4. Agencement de commutation selon l'une quelconque des revendications 2 ou 3, **caractérisé en ce que** :
- la tension de sortie (u₁) du capteur (11) est amenée à un circuit amplificateur (20) avec un signe de polarité commandable du facteur d'amplification ;
- le signe de polarité du facteur d'amplification du circuit amplificateur (20) est commandé en fonction du signal de commutation (u₀*) ; et
- un générateur de rampe (21 ; 38) dans lequel aucun inversement de polarité ne se produit est branché en aval du circuit amplificateur (20).

5. Agencement de commutation selon la revendication 4, **caractérisé en ce que** :
- la tension de sortie (u₁) du capteur (11) est amenée à l'entrée inversante d'un premier amplificateur opérationnel (23) par le biais d'une première résistance (24) ;
- la tension de sortie (u₂) du premier amplificateur opérationnel (23) est amenée à son entrée inversante par le biais d'une deuxième résistance (25) ;
- la tension de sortie (u₁) du capteur (11) est amenée à l'entrée non inversante du premier amplificateur opérationnel (23) par le biais d'une troisième résistance (26) ; et
- l'entrée non inversante du premier amplificateur opérationnel (23) est reliée à un potentiel de référence par le biais d'un commutateur (27) commandé par un signal de commutation (u₀*).

6. Agencement de commutation selon la revendication 5, **caractérisé en ce que** la première (24) et la deuxième (25) résistance sont de même valeur.

7. Agencement de commutation selon l'une quelconque des revendications 4 à 6, **caractérisé en ce que** le générateur de rampe (21) présente un comportement de transmission inversant.

8. Agencement de commutation selon la revendication 7, **caractérisé en ce que** :
- le générateur de rampe (21) comporte un deuxième (30) et un troisième (31) amplificateur opérationnel ;
- la tension de sortie (u₂) du circuit amplificateur (20) est amenée à l'entrée non inversante du deuxième amplificateur opérationnel (30) par le biais d'une quatrième résistance (32) et la tension de sortie (u₄) du troisième amplificateur opérationnel (31) est amenée par le biais d'une cinquième résistance (33) ;
- l'entrée inversante du deuxième amplificateur opérationnel (30) est reliée à un potentiel de référence ;
- la tension de sortie (u₄) du troisième amplificateur opérationnel (31) est amenée à son entrée inversante par le biais d'un condensateur (35) et la tension de sortie (u₃) du deuxième amplificateur opérationnel (30) y est amenée par le biais d'une sixième résistance (34) ; et
- l'entrée non inversante du troisième amplificateur opérationnel (31) est reliée à un potentiel de référence.

9. Agencement de commutation selon la revendication 8, **caractérisé en ce que** la quatrième (32) et la cinquième (33) résistance sont de même valeur.

10. Agencement de commutation selon l'une quelconque des revendications 4 à 6, **caractérisé en ce que** le générateur de rampe (38) présente un comportement de transmission non inversant.

11. Agencement de commutation selon la revendication 10, **caractérisé en ce que** :
- le générateur de rampe (38) comporte un deuxième (30) et un troisième (31) amplificateur opérationnel ;
- la tension de sortie (u₂) du circuit amplificateur (20) est amenée à l'entrée inversante du deuxième amplificateur opérationnel (30) ;
- la tension de sortie (u₆) du générateur de rampe (38) est amenée à l'entrée non inversante du deuxième amplificateur opérationnel (30) ;
- la tension de sortie (u₆) du troisième amplificateur opérationnel (31) est amenée à son entrée inversante par le biais d'un condensateur (35) et la tension de sortie (u₅) du deuxième amplificateur opérationnel (30) y est amenée par le biais d'une sixième résistance (34) ;
- l'entrée non inversante du troisième amplificateur opérationnel (31) est reliée au potentiel de référence.

12. Agencement de commutation selon la revendication 10, **caractérisé en ce que** :
- la tension de sortie (u₂) du circuit amplificateur (20) est amenée à l'entrée inversante du deuxième amplificateur opérationnel (30) par le biais d'une septième résistance (41 ) ;
- la tension de sortie (u₂) du circuit amplificateur (20) est amenée à l'entrée non inversante du deuxième amplificateur opérationnel (30) par le biais d'une huitième résistance (42) ;
- une neuvième résistance (43) est disposée entre la sortie du troisième amplificateur opérationnel (31) et l'entrée non inversante du deuxième amplificateur opérationnel (30) ;
- la tension de sortie (u₆) du troisième amplificateur opérationnel (31) est amenée à son entrée inversante par le biais d'un condensateur (35) et la tension de sortie (u₅) du deuxième amplificateur opérationnel (30) y est amenée par le biais d'une sixième résistance (34) ; et
- l'entrée non inversante du troisième amplificateur opérationnel (31) est reliée au potentiel de référence.

13. Agencement de commutation selon la revendication 12, **caractérisé en ce que** la huitième (42) et la neuvième (43) résistance sont de même valeur.

14. Agencement de commutation selon l'une quelconque des revendications 1 à 3, **caractérisé en ce que** :
- la tension de sortie (u₁) du capteur (11) est amenée à un générateur de rampe (45 ; 48) commandé qui peut être commuté entre un comportement de transmission inversant et non inversant ; et
- le signe de polarité du comportement de transmission est commandé en fonction du signal de commutation (u₀*).

15. Agencement de commutation selon la revendication 14, **caractérisé en ce que** :
- le générateur de rampe (45) commandé comporte un deuxième (30) et un troisième (31) amplificateur opérationnel ;
- la tension de sortie (u₁) du capteur (11) est amenée à l'entrée inversante du deuxième amplificateur opérationnel (30) par le biais d'une septième résistance (41 ) ;
- un commutateur (46) commandé par le signal de commutation (u₀*) est disposé entre l'entrée inversante du deuxième amplificateur opérationnel (30) et le potentiel de référence ;
- la tension de sortie (u₁) du capteur (11) est amenée à l'entrée non inversante du deuxième amplificateur opérationnel (30) par le biais d'une huitième résistance (42) ;
- la tension de sortie (u₈) du générateur de rampe (45) commandé est amenée à l'entrée non inversante du deuxième amplificateur opérationnel (30) par le biais d'une neuvième résistance (43) ;
- la tension de sortie (u₈) du troisième amplificateur opérationnel (31) est amenée à son entrée inversante par le biais d'un condensateur (35) et la tension de sortie (u₇) du deuxième amplificateur opérationnel (30) y est amenée par le biais d'une sixième résistance (34) ; et
- l'entrée non inversante du troisième amplificateur opérationnel (31) est reliée au potentiel de référence.

16. Agencement de commutation selon la revendication 15, **caractérisé en ce que** la huitième (42) et la neuvième (43) résistance sont de même valeur.

17. Agencement de commutation selon l'une quelconque des revendications 15 ou 16, **caractérisé en ce que** :
- une dixième résistance (51) est disposée entre la sortie du deuxième amplificateur opérationnel (30) et la sixième résistance (34) ;
- le point de jonction (52) de la dixième résistance (51) est relié à la sixième résistance (34) par le biais d'une première diode (54) présentant une tension auxiliaire négative (-U_{H}) et par le biais d'une deuxième diode (55) présentant une tension auxiliaire (+U_{H}) positive de même valeur ;
- la valeur des tensions auxiliaires (-U_{H}, +U_{H}) est inférieure à la valeur de la tension de sortie (u₇) du deuxième amplificateur opérationnel (30) en cas de surcommande.

18. Agencement de commutation selon la revendication 17, **caractérisé en ce qu'**un deuxième condensateur (58) est disposé parallèlement au circuit en série de la sixième (34) et de la dixième (51) résistance.

19. Agencement de commutation selon l'une quelconque des revendications précédentes, **caractérisé en ce que** la transconductance de rampe du générateur de rampe (21 ; 38 ; 45 ; 48) est supérieure à la transconductance maximale du signal utile de la tension de sortie (u₁) du capteur (11 ; 11' ; 78).

20. Agencement de commutation selon l'une quelconque des revendications précédentes, **caractérisé en ce qu'**au moins un filtre linéaire (50) est branché en aval de l'agencement de commutation (10 ; 45 ; 48) formant une rampe.

21. Agencement de commutation selon la revendication 20, **caractérisé en ce que** le filtre linéaire (50) est un filtre passe-bas actif de deuxième ordre avec accouplement simple.

22. Agencement de commutation selon l'une quelconque des revendications 20 ou 21, **caractérisé en ce que** le filtre linéaire (50) prend la forme d'un filtre de Bessel.

23. Agencement de commutation selon l'une quelconque des revendications précédentes, **caractérisé en ce qu'**un circuit d'adaptation (68) est disposé entre le capteur (11' ; 78) et l'agencement de commutation (10) formant une rampe, ledit circuit amplifiant l'amplitude de la tension de sortie (u₁₃ à u₁₄ ; u₈₅ à u₈₂) du capteur (11' ; 78).

24. Agencement de commutation selon l'une quelconque des revendications précédentes, **caractérisé en ce que** le circuit d'adaptation (68) découple les potentiels de référence (M₁₁ et/ou M₁₀) du capteur (11') et de l'agencement de commutation (10) formant une rampe.

25. Agencement de commutation selon l'une quelconque des revendications 23 ou 24, **caractérisé en ce que** :
- une première tension de sortie (u₁₃) du capteur (11') est amenée à l'entrée inversante d'un quatrième amplificateur opérationnel (69) par le biais d'une onzième résistance (71) ;
- une deuxième tension de sortie (u₁₄) du capteur (11') est amenée à l'entrée non inversante du quatrième amplificateur opérationnel (69) par le biais d'une douzième résistance (72) ;
- la sortie du quatrième amplificateur opérationnel (69) est reliée à l'entrée inversante du quatrième amplificateur opérationnel (69) par le biais d'une treizième résistance (73) ;
- l'entrée non inversante du quatrième amplificateur opérationnel (69) est reliée au potentiel de référence (M₁₀) par le biais d'une quatorzième résistance (74).

26. Agencement de commutation selon l'une quelconque des revendications précédentes, **caractérisé en ce que** le capteur est un détecteur de déplacement (11 ; 11') inductif et que l'amplitude et la position de phase de la tension de sortie (u₁ ; u₁₃ à u₁₄) du détecteur de déplacement (11, 11') sert de mesure pour l'extension (s) d'un noyau ferromagnétique (15).

27. Agencement de commutation selon l'une quelconque des revendications 1 à 25, **caractérisé en ce que** le capteur est un détecteur de déplacement (78) capacitatif et que la grandeur non électrique (s) est une capacité (C₁, C₂) du détecteur de déplacement (78) qui varie de telle sorte que l'amplitude et la position de phase de la tension de sortie (u₈₅ à u₈₂) du détecteur de déplacement (78) sert de mesure pour la grandeur non électrique (s).
